# NEUE EUROPÄISCHE PATENTSCHRIFT

(11) **EP 2 801 538 B2**
(45) Veröffentlichungstag und Bekanntmachung des Hinweises auf die Entscheidung über den Einspruch: **18.11.2020**
(45) Hinweis auf die Patenterteilung: 01.02.2017
(21) Anmeldenummer: 14178389.4
(22) Anmeldetag: 20.09.2011
(51) Int. Cl.: B65D 85/804

(54) **Portionskapsel und Verfahren zur Herstellung eines Getränks mit einer Portionskapsel**
Portion capsule and method for producing a beverage using a portion capsule
Capsule et procédé de fabrication d'une boisson à l'aide d'une capsule

(30) Priorität: 22.09.2010 DE 202010013500 U; 07.02.2011 DE 102011010589; 02.03.2011 DE 102011012881; 09.03.2011 US 201113044217
(43) Veröffentlichungstag der Anmeldung: 12.11.2014
(62) Teilanmeldung aus: 11770342.1
(73) Patentinhaber: K-fee System GmbH, 51469 Bergisch Gladbach (DE)
(72) Erfinder: Machlich, Gotthard, 61476 Kronberg (DE)
(74) Vertreter: Wolff, Felix

(56) Entgegenhaltungen:
- EP-A1- 0 468 079
- EP-A1- 0 512 468
- EP-A1- 0 521 510
- EP-A1- 1 344 722
- EP-A1- 1 555 219
- EP-A1- 1 710 173
- EP-A1- 1 792 850
- EP-A1- 1 980 501
- EP-A1- 1 997 748
- WO-A1-03/073896
- WO-A2-2005/066040
- GB-A- 1 402 799
- US-A- 2 778 739

## Beschreibung

### Stand der Technik

Die vorliegende Erfindung betrifft eine Portionskapsel zur Herstellung eines Getränks, aufweisend einen Kapselkörper mit einem Kapselboden und einer Einfüllseite, wobei zwischen dem Kapselboden und der Einfüllseite ein Hohlraum zur Aufnahme eines pulverförmigen oder flüssigen Getränkesubstrats ausgebildet ist und wobei zwischen dem Getränkesubstrat und dem Kapselboden ein Filterelement angeordnet ist.

Solche Portionskapseln sind aus dem Stand der Technik allgemein bekannt. Beispielsweise sind in den Druckschiften EP 1792850 B1, EP 1344722 A1 und US 2003/0172813 A1 gattungsgemäße Portionskapseln zur Kaffee- und Espressozubereitung offenbart.

Derartige Portionskapseln zur Herstellung eines Getränkes sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise eine offene Einfüllseite mit einem Kragenrand, auf den eine Deckelfolie aufgesiegelt oder aufgeklebt wird, einen geschlossenen Kapselboden, wobei zwischen dem Getränkesubstrat und dem Kapselboden ein sich gegen den Kapselboden abstützendes Partikelsieb angeordnet ist. Diese Siebe sind entweder aus einem thermoplastischen Kunststoff gespritzt oder aus einer Kunstofffolie tiefgezogen oder geprägt.

Für die Zubereitung eines Kaffeegetränkes wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes geöffnet und nach dem Abdichten der Brühkammer wird die mit einer Verschlussfolie verschlossene Einfüllseite der Portionskapsel mittels Einstechmitteln angestochen. Anschließend wird Zubereitungsflüssigkeit, vorzugsweise heißes Wasser, unter Druck in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat aus. Für die Zubereitung eines Espresso wirkt zum Extrahieren der ätherischen Öle beispielsweise ein Brühwasserdruck von bis zu 20 bar auf das Kaffepulver. Dieser Druck wirkt ferner auch auf das zwischen dem Kaffeepulver und dem Kapselboden und vor dem eingestochenen Kapselauslauf liegende Partikelsieb ein.

Nachteilig an den im Kunststoffspritzverfahren oder im Tiefzieh- oder Prägeverfahren hergestellten Sieben ist jedoch, dass für die Rückhaltung der Kaffeepartikel die Öffnung der Sieblöcher kleiner als die kleinsten Kaffeepartikel sein müssen. Da im Kaffeemahlverfahren zwangsläufig auch ein gewisser Staubanteil anfällt, ergibt sich bei zu großen Sieblöchern ein Kaffeepartikeldurchgang oder bei zu kleinen Sieblöchern, insbesondere bei hohen Drücken, ein Verstopfen der Siebe. Ferner sind unter den Sieben entsprechende, gegen den Kapselboden wirkende Abstützelemente erforderlich, um die Brühwasserdrücke von bis zu 20 bar aufzunehmen und eine Verformung der Siebe in Folge des hohen Brühwasserdrucks (zusammen mit einer hohen Brühwassertemperatur) zu verhindern. In nachteiliger Weise, erfordern diese Abstützelement insbesondere bei im Spritzgussverfahren hergestellten Siebanordnungen einen zusätzlichen Materialeinsatz, wodurch die Herstellungskosten steigen.

Im Stand der Technik sind deshalb Portionskapseln mit Siebanordnungen bekannt, die diese Nachteile vermeiden sollen. In der US 2778739, der EP 1710173 A1 und der US 5352765 sind Portionskapseln mit Siebanordnungen offenbart, die aus einem Siebträger mit relativ großen Durchgangsöffnungen bestehen, wobei diese Öffnungen mit einem Filtermaterial abgedeckt sind. Nachteil dieser Anordnungen ist, dass zur Darstellung derartiger Siebanordnungen Zusatzkosten für Material und die Fertigung entstehen, da sie aus einem stabilen Siebträger und dem auf dem Siebträger angeordneten Filtermaterial bestehen.

Sowohl bei Sieben mit Sieblöchern als auch bei Siebanordnungen mit einem zusätzlichen Filtermaterial muss sichergestellt werden, dass das durch die Siebanordnung tretende fertige Getränk zu einer Kapselausflussöffnung fließen kann, d.h. zwischen dem Kapselboden und der Siebanordnung muss ein Freiraum für den Getränkeablauf vorgesehen werden. Außerdem beanspruchen derartige Siebanordnungen einen eigenen Raumanteil in der Portionskapsel, was zu einer Vergrößerung des Kapselvolumens und damit zwangsläufig ebenfalls zu einem zusätzlichen Materialeinsatz führt.

Es war deshalb die Aufgabe der vorliegenden Erfindung, eine Portionskapsel mit einer Filteranordnung zur Verfügung zu stellen, welche im Vergleich zum Stand der Technik kostengünstiger zu fertigen ist und bei welcher gleichzeitig die im Zusammenhang mit dem Stand der Technik aufgezeigten Nachteile vermieden werden.

Gelöst wird diese Aufgabe mit einer Portionskapsel zur Herstellung eines Getränks, gemäß Patentanspruch 1.

Erfindungsgemäß weist das Filterelement eine Nadelfilzstruktur auf. Das Filterelement besteht aus mindestens einer Filzstruktur und einer Trägerstruktur, einer Gewebestruktur, wobei, besonders bevorzugt die Filzstruktur, zumindest einen Teilabschnitt des Volumens, die Trägerstruktur umfasst. Vorzugsweise erstreckt sich die Filzstruktur über der gesamten Querschnitt der Trägerstruktur, besonders bevorzugt aber nur über nur über einen Teilbereich der Höhe. Vorzugsweise ist die Filzstruktur form- kraft und/oder stoffschlüssig mit der Trägerstruktur verbunden. Vorzugsweise weist das Filterelement zwei oder mehr Filzstrukturen auf, die durch die Trägerstruktur vorzugsweise voneinander getrennt sind. Die Dicke der beiden Filzstrukturen kann gleich oder unterschiedlich sein. Vorzugsweise ist eine dem Pulver oder Tee zugewandte Filzstruktur dünner als die dem Kapselboden zugewandte Filzstruktur oder umgekehrt. Vorzugsweise wird die Oberfläche der Filzstruktur behandelt, beispielsweise wärmebehandelt, um beispielsweise lose Fasern zu fixieren. Vorzugsweise wird das eine Filzstruktur aufweisende Filterelement lediglich in die Kapsel, insbesondere auf deren Boden, eingelegt. Das Filterelement kann aber auch mit der Kapsel, insbesondere deren Boden, insbesondere stoffschlüssig, verbunden werden. Beim Perforieren kann das Perforationsmittel in dieses Filterelement eindringen. Vorzugsweise werden mehrere Filterelemente, die eine oder mehrere Filzstrukturen und eine Trägerstruktur aufweisen, in der Kapsel übereinander angeordnet, ggf. miteinander verbunden.

Ein Filterelement mit einer Filzstruktur hat den Vorteil, dass sich keine "Crema" auf einem Kaffee, Espresso oder dergleichen bildet bzw. dass sich auf einem Tee keine Blasen bilden.

Ein eine Gewebestruktur, und eine Filzstruktur aufweisendes Filterelement wird beispielsweise dadurch hergestellt, dass eine Gewebestruktur bestehend aus Längs- und Querfäden zur Verfügung gestellt wird. Für die Konstruktion eines Filzes, insbesondere eines Nadelfilzes, werden vorzugsweise Fasereinheiten ausgewählt von 0.8 - 7 dtex. Die Verbindung der Einzelfasern miteinander zu einem Filz und/oder dessen Verankerung in der Trägerstruktur findet vorzugsweise durch den Produktionsprozess des Vernadelns statt. Dabei werden Nadeln mit umgekehrten Widerhaken in das vorgelegte Faserpaket mit hoher Geschwindigkeit eingestochen und wieder herausgezogen. Durch die Widerhaken werden die Fasern über eine Vielzahl entstehender Schlaufen miteinander und/oder mit dem Trägergewebe verschlungen.

Das Trägerelement aufweisend eine oder mehrere Filzstrukturen umfasst bevorzugt eine Massenbelegung (auch als Grammatur oder Flächengewicht bezeichnet) zwischen 100 und 800 Gramm pro Quadratmeter, besonders bevorzugt zwischen 200 und 650 Gramm pro Quadratmeter, und ganz besonders bevorzugt, von im Wesentlichen 150 - 250 Gramm pro Quadratmeter für die Herstellung von Tee und 600 - 700 Gramm pro Quadratmeter für die Herstellung von Kaffee, Espresso oder dergleichen. Das Filterelement bzw. das Vlies weist bevorzugt eine Dicke zwischen 0,8 und 3,3 Millimetern, besonders bevorzugt zwischen 1,1 und 3,0 Millimetern, und ganz besonders bevorzugt, 1,2 - 1,4 Millimeter für die Herstellung von Tee und 2,6 - 3,0 für die Herstellung von Kaffee auf.

Das Filterelement wird vorzugsweise einfach in den Kapselkörper eingelegt und liegt anschließend entweder locker auf dem Kapselboden auf oder wird mit diesem und/oder der Seitenwand der Kapsel, insbesondere durch Schweißen, beispielsweise mit Ultraschall, verbunden, bevor das Getränkesubstrat in den Kapselkörper eingefüllt wird. Der Kapselkörper ist bevorzugt kegelstumpfförmig oder zylindrisch geformt und wird beispielsweise aus Kunststoff, einem Naturstoff und/oder einem biologisch abbaubaren Werkstoff aus einer tiefgezogenen Kunststofffolie oder im Kunststoffspritzverfahren hergestellt. Der Kapselkörper weist vorzugsweise auf der Einfüllseite einen Kragenrand auf, auf den eine Deckelfolie aufgesiegelt oder aufgeklebt ist. Alternativ ist denkbar, dass der Kapselkörper und ein Kapseldeckel mittels eines mechanischen Verfahrens miteinander verbunden sind. Der Boden der Portionskapsel ist vorzugsweise geschlossen und wird vorzugsweise erst in der Brühkammer mittels eines von außen auf den Portionskapselboden wirkenden Perforationsmittels zur Erzeugung einer Auslauföffnung perforiert. Alternativ wäre aber ebenso denkbar, dass der Boden der Portionskapsel bereits werksseitig mit einer Auslauföffnung versehen ist, welche mittels einer Dichtfolie vorzugsweise verschlossen ist. Die Dichtfolie ist dann beispielsweise mittels des Perforationsmittels perforierbar oder von Hand vom Kapselboden abziehbar. Bei der Dichtfolie handelt es sich vorzugsweise um eine Kunststofffolie, die mindestens eine Barriereschicht, beispielsweise eine Metallschicht, insbesondere eine Aliminium-Schicht aufweist. Die Kunststofffolie weist vorzugsweise auf ihrer der Kapsel zugewandten Seite eine "Peel-Schicht" auf, um die Kunststofffolie vergleichsweise leicht von dem Kapselboden lösen zu können.

Die Auslauföffnung ist vorzugsweise so groß vorgesehen, dass sie ein gegebenenfalls vorhandenes Perforationsmittel berührungsfrei aufnehmen kann. Besonders bevorzugt ist die Auslauföffnung so groß vorgesehen, dass an ihr, beim Ausströmen des fertiggestellten Getränkes kein nennenswertes Druckverlust entsteht, insbesondere dass es zu keiner nennenswerten Verwirbelung des fertiggestellten Getränkes kommt, der zu einem Gaseintrag in das Getränk und damit zur Schaumbildung führen könnte.

Vorzugsweise ist das Filterelement elastisch ausgebildet ist und zumindest in seinem Randbereich im Bereich des Kapselbodens angeordnet und/oder befestigt ist. Wenn der Kapselboden von einem äußeren Perforationsmittel durchstochen wird, kann das Filterelement bei einem Kontakt mit dem Perforationsmittel aufgrund seiner Elastizität derart nachgeben bzw. gedehnt werden, dass eine Perforation des Filterelements verhindert wird. Somit wird die Gefahr ausgeräumt, dass das Filterelement durch das Perforationsmittel perforiert wird und Getränkesubstanz ungefiltert aus der Portionskapsel gespült wird. Eine feste Beabstandung zwischen dem Filterelement und dem Kapselboden, wie sie aus dem Stand der Technik bekannt ist, ist nicht notwendig, da dieser Abstand durch das Perforationsmittel automatisch herbeigeführt wird. Auf diese Weise entsteht unterhalb des Filterelements ferner ein Sammelbecken für die durch das Filterelement hindurchtretende Getränkeflüssigkeit.

Vorzugsweise wird das Filterelement von dem Perforationsmittel gespannt, angestochen und/oder durchstochen.

Vorzugsweise ist das Filterelement im Hohlraum der Portionskapsel angeordnet und liegt auf einer der Einfüllseite zugewandten Seite des Kapselbodens auf. Vorteilhafterweise werden die Herstellungskosten für die Portionskapsel erheblich reduziert, da das Filterelement einfach nur locker in die Portionskapsel eingelegt wird. Eine Fixierung des Filterelements erfolgt vorzugsweise durch die Getränkesubstanz, welche beim Befüllen der Portionskapsel auf dem Filterelement angeordnet wird und somit das Filterelement festklemmt.

Vorzugsweise ist der Durchmesser des Filterelements größer als der Durchmesser des Kapselbodens. In vorteilhafter Weise wird beim Befüllen der Portionskapsel mit Getränkesubstanz das Filterelement an den Bodenbereich angedrückt, wobei der überstehende Randbereich sich zwangsläufig an einen Seitenwandbereich der Portionskapsel anschmiegt und in Richtung der Einfüllseite absteht bzw. in Richtung der Einfüllseite abgeknickt wird. Dies hat den Vorteil, dass, wenn ein Zentralbereich des Filterelements infolge eines mechanischen Kontaktes mit dem von Außen in den Bodenbereich eintretenden Perforationsmittel vom Boden abgehoben wird, der Randbereich in Richtung des Kapselbodens und in Richtung des Zentralbereichs nachrutscht, so dass keine Getränkesubstanz ungefiltert am Rand des Filterelements vorbei das Filterelement in Richtung Ausgangsöffnung umfließt. Dies ermöglicht insbesondere ein Anheben des Filterelements vom Kapselboden auch bei einem nicht-elastischen Filterelement, ohne dass die Filterwirkung beeinträchtigt wird. Bei einem elastischen Filterelement wird das Anheben des Zentralbereichs ohne Beeinträchtigung der Filterwirkung durch den nachrutschenden Randbereich des Filterelements zumindest begünstigt, da auch eine Kombination aus Dehnen und Nachrutschen des Filterelements im Falle der Perforation des Kapselbodens denkbar ist.

Vorzugsweise weist das Filterelement einen Randbereich auf, welcher im Wesentlichen in Richtung der Einfüllseite absteht und/oder in Richtung der Einfüllseite umgebogen ist. Auf diese Weise können ebenfalls die oben beschriebenen Vorteile erzielt werden, wonach der Randbereich in Richtung des Kapselbodens bzw. in Richtung des Zentralbereichs nachrutscht, sobald das Filterelement im Zentralbereich angehoben wird.

Vorzugsweise erstreckt sich der Randbereich zumindest teilweise entlang eines Seitenwandbereichs des Kapselkörpers, wobei sich der Seitenwandbereich zwischen der Einfüllseite und dem Kapselboden erstreckt. In vorteilhafter Weise wird der Randbereich beim Befüllen der Portionskapsel durch die Getränkesubtanz nach Außen gegen den Seitenwandbereich gedrückt, wodurch eine verbesserte Dichtwirkung zwischen dem Seitenwandbereich und dem Filterelement erzielt wird. Insbesondere beim oben beschriebenen Nachrutschen des Filterelements wird hierdurch verhindert, dass Brühwasser das Filterelement ungehindert umfließt.

Vorzugsweise überdeckt das Filterelement den Kapselboden vollständig oder nur teilweise. Insbesondere ist es ausreichend, wenn das Filterelement ausschließlich im Bereich der Perforierung bzw. im Bereich einer Auslassöffnung im Kapselboden angeordnet ist.

Vorzugsweise ist das Filterelement am Kapselboden befestigt, wobei das Filterelement vorzugsweise stoffschlüssig am Kapselboden, insbesondere durch Siegeln befestigt ist. Vorteilhafterweise wird somit ein Verrutschen des Filterelements verhindert. Diese Befestigung erfolgt vorzugsweise durch Ultraschallschweißen.

Vorzugsweise ist das Filterelement in einem Randbereich des Kapselbodens am Kapselboden befestigt und/oder ist das Filterelement in einem Randbereich des Filterelements am Seitenwandbereich befestigtw. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Gemäß einer weiteren Ausführungsform der vorliegenden Erfindung ist vorgesehen, dass der Kapselboden eine Ausbuchtung in eine der Einfüllseite entgegengesetzte Richtung aufweist. Vorteilhafterweise dient die Ausbuchtung zur Aufnahme des Perforierungsmittels, so dass beim Einstechen des Perforierungsmittels in den Kapselboden der Kapselboden im Bereich der Ausbuchtung zwar perforiert wird, das Perforierungsmittel aber anschließend im Hohlraum der Ausbuchtung verbleibt. Einer Perforierung des Filterelements wird somit vorgebeugt. Insbesondere ist bei dieser Ausführungsform ein Anheben des Filterelements durch das Perforierungsmittel nicht erforderlich. Gleichwohl kann das Filterelement dennoch dazu ausgebildet sein, von dem Perforierungsmittel angehoben zu werden, um eine versehentliche Perforierung in jedem Falle auszuschließen.

Vorzugsweise ist das Filterelement derart ausgebildet, dass bei einer Perforation des Kapselbodens durch ein äußeres Perforationsmittel zumindest teilweise ein Abheben des Filterelements vom Kapselboden erfolgt. Auf diese Weise wird eine Perforierung des Filterelements durch das Perforierungsmittel wirksam verhindert.

Vorzugsweise hebt das Filterelement sich nur in einem Zentralbereich vom Kapselboden ab und liegt im Randbereich des Kapselbodens weiter auf dem Kapselboden auf oder ist am Kapselboden befestigt. Vorteilhafterweise wird somit ein Verrutschen des Filterelements verhindert und die Dichtwirkung zwischen Kapselkörper und Filterelement vergrößert, wobei aber gleichzeitig ein Anheben des Filterelements in seinem Zentralbereich weiterhin ermöglicht wird. Das Filterelement ist dabei vorzugsweise elastisch ausgebildet.

Vorzugsweise ist das Filterelement derart ausgebildet, dass bei einer Perforation des Kapselbodens durch ein äußeres Perforationsmittel das Filterelement sich in seinem Zentralbereich vom Kapselboden abhebt und ein in Richtung der Einfüllseite vormals abstehender Randbereich des Filterelements zumindest teilweise in Richtung des Kapselbodens nachrückt. Auf diese Weise können die oben beschriebenen Vorteile erzielt werden, wonach der Randbereich in Richtung des Kapselbodens bzw. in Richtung des Zentralbereichs nachrutscht, sobald das Filtervlies im Zentralbereich durch das Perforationsmittel angehoben wird, so dass keine Getränkesubstanz ungefiltert am Rand des Filterelements vorbei das Filterelement in Richtung Ausgangsöffnung umfließt.

Vorzugsweise weist das Filterelement einen Materialspeicher auf. In vorteilhafter Weise ermöglicht ein Materialspeicher, dass das Filterelement sich in seinem Zentralbereich vom Kapselboden abhebt, obwohl das Filterelement in seinem Randbereich fest (insbesondere stoffschlüssig) mit dem Kapselboden verbunden ist und im Wesentlichen nicht-elastisch ausgebildet ist. Der Materialspeicher umfasst insbesondere einen gewellten oder gefalteten Bereich im Filterelement, welcher sich teilweise glättet, wenn der Zentralbereich vom Kapselboden durch das Perforationsmittel abgehoben wird. Auf diese Weise ist sichergestellt, dass bei einer Perforation des Kapselbodens durch ein äußeres Perforationsmittel das Filterelement sich in seinem Zentralbereich vom Kapselboden abhebt und Material des Filterelements aus dem Materialspeicher in Richtung des Zentralbereichs nachrückt, so dass die sich in Folge des Abhebens vergrößernde Oberfläche des Filterelements durch Material aus dem Materialspeicher kompensiert wird.

Gemäß einer weiteren bevorzugten Ausführungsform der vorliegenden Erfindung ist vorgesehen, dass der Kapselboden eine Sollbruchstelle aufweist, welche dazu vorgesehen ist, infolge eines mechanischen Kontakts mit einem äußeren Perforationsmittel aufzureißen, wobei die Sollbruchstelle vorzugsweise eine Mehrzahl von sternförmig um einen zentralen Punkt des Kapselbodens angeordnete Schwächungslinien umfasst. Der Kapselboden weist entlang der Schwächungslinien vorzugsweise eine reduzierte Materialstärke auf und/oder ist entlang der Schwächungslinien perforiert. In vorteilhafter Weise wird durch die Realisierung der Sollbruchstelle die Perforation des Kapselbodens begünstigt. Dies hat ferner den Vorteil, dass eine weniger scharfe Perforierungsspitze zur Perforierung des Kapselbodens Verwendung finden kann, so dass die Gefahr einer Beschädigung des Filterelements beim Anheben des Filterelements durch die Perforierungsspitze reduziert wird. Insbesondere reicht nun ein stumpfes Perforierungsmittel zur Perforation des Kapselbodens aus.

Gemäß einer weiteren bevorzugten Ausführungsform weist der Kapselboden permanent eine Ausgangsöffnung auf, welche vorzugsweise mit einer Folie abgedichtet ist, wobei die Folie besonders bevorzugt eine Abziehlasche zum Abziehen der Folie von Hand aufweist. Eine Perforation des Kapselbodens mittels eines äußeren Perforationsmittel ist hierbei vorteilhafterweise nicht erforderlich. Vor dem Einlegen der Portionskapsel in die Brühkammer wird die Folie mittels der Abziehlasche einfach vom Kapselboden abgezogen und der Brühvorgang kann gestartet werden. Die Kombination einer vorgefertigten und somit vergleichsweise großen Ausgangsöffnung mit einem Filterelement aus Nadelfilz hat den Vorteil, dass die Getränkeflüssigkeit nicht unter hohem Druck aus der Ausgangsöffnung herausfließt und somit die Schaumbildung ("Crema"), insbesondere bei der Herstellung von amerikanischem Kaffee oder Tee, verhindert wird.

Ein weiterer Gegenstand der vorliegenden Erfindung ist ein Verfahren zur Herstellung eines Getränks mit einer Portionskapsel, wobei in einem ersten Verfahrensschritt die Portionskapsel bereitgestellt wird, wobei in einem zweiten Verfahrensschritt der Kapselboden mittels eines äußeren Perforationsmittels perforiert wird und wobei in einem dritten Verfahrensschritt das Filterelement zumindest teilweise vom Kapselboden beabstandet wird. Im dritten Verfahrensschritt wird das Filterelement vorzugsweise vom Perforationsmittel derart vom Kapselboden angehoben, dass es sich vom perforierten Kapselboden beabstandet. Der Kapselboden wird dabei im Bereich eines zentralen Punkts perforiert, so dass gleichzeitig das Filterelement hauptsächlich in seinem Zentralbereich angehoben wird, während es in seinem Randbereich vorzugsweise weiter auf dem Kapselboden aufliegt oder am Kapselboden befestigt bleibt. Auf diese Weise wird die Dichtwirkung zwischen Kapselkörper und Filterelement durch das Anheben des Zentralbereichs nicht beeinträchtigt.

Gemäß einer weiteren bevorzugten Ausführungsform der vorliegenden Erfindung ist vorgesehen, dass das Filterelement bei der Beabstandung des Zentralbereichs vom Kapselboden zumindest teilweise gedehnt wird. Auf diese Weise wird eine stoffschlüssige Befestigung des Randbereichs des Filterelements am Kapselboden ermöglicht, wobei sich trotzdem das Filterelement im Zentralbereich vom Kapselboden abheben kann. Hierdurch werden die Vorteile einer maximalen Dichtwirkung mit den Vorteilen des sich anhebenden Filterelements verknüpft.

Gemäß einer weiteren bevorzugten Ausführungsform der vorliegenden Erfindung ist vorgesehen, dass ein in Richtung der Einfüllseite abstehender Randbereich des Filterelements bei der Beabstandung des Zentralbereichs vom Kapselboden während des dritten Verfahrensschrittes in Richtung des Kapselbodens nachrückt. Auf diese Weise wird verhindert, dass Getränkeflüssigkeit ungefiltert in Richtung der Ausgangsöffnung gelangt, wenn der Zentralbereich vom Kapselboden angehoben wird.

Gemäß einer weiteren bevorzugten Ausführungsform der vorliegenden Erfindung ist vorgesehen, dass bei der Beabstandung des Zentralbereichs vom Kapselboden während des dritten Verfahrensschrittes Material des Filterelements aus dem Materialspeicher in Richtung des Kapselbodens nachrückt, wobei insbesondere ein gewellter oder gefalteter Bereich des Filterelements zumindest teilweise geglättet wird. Auf diese Weise wird ebenfalls eine stoffschlüssige Befestigung des Randbereichs des Filterelements am Kapselboden ermöglicht, wobei sich trotzdem das Filterelement im Zentralbereich vom Kapselboden abheben kann. Der Materialspeicher erstreckt sich vorzugsweise um den Zentralbereich des Filterelements herum.

Ein weiterer Gegenstand der vorliegenden Erfindung ist die Verwendung einer Portionskapsel zur Herstellung eines Getränks, vorzugsweise zur Herstellung eines Kaffee-, Kakao-, Tee- und/oder Milchgetränks.

Die zu einem Gegenstand der vorliegenden Erfindung gemachten Ausführungen gelten für die anderen Gegenstände gleichermaßen und umgekehrt.

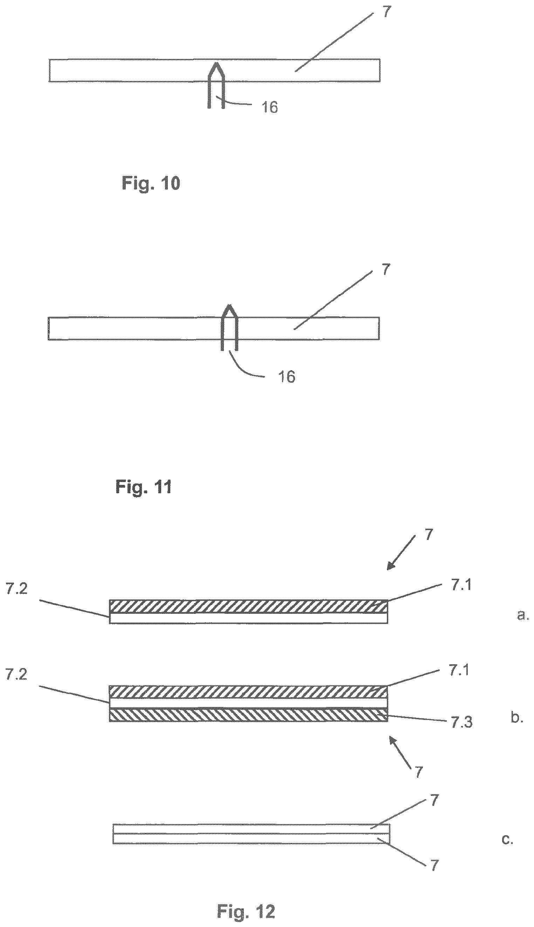

Ausführungsbeispiele der Erfindung sind in den Figuren dargestellt und in der nachfolgenden Beschreibung näher erläutert, wobei lediglich die Figuren 12a - 12c die erfindungsgemäße Portionskapsel zeigen. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel, die für die Zubereitung von Espresso eingerichtet ist.
- **Figur 2**: zeigt einen Längsschnitt durch eine in einer geschlossenen Brühkammer liegende Portionskapsel
- **Figur 3**: zeigt einen Längsschnitt durch eine in einer geschlossenen Brühkammer liegende Portionskapsel
- **Figuren 4a, 4b**: zeigen schematische Schnittbildansichten einer Portionskapsel
- **Figuren 5a, 5b**: zeigen schematische Schnittbildansichten einer Portionskapsel
- **Figuren 6a, 6b**: zeigen schematische Schnittbildansichten einer Portionskapsel
- **Figuren 7a, 7b**: zeigen schematische Schnittbildansichten einer Portionskapsel
- **Figuren 8a, 8b**: zeigen schematische Aufsichten eines Kapselbodens einer Portionskapsel.
- **Figur 9**: zeigt eine Schnittbildansicht einer Portionskapsel.
- **Figur 10**: zeigt ein Perforationsmittel, das in das Filterelement eindringt.
- **Figur 11**: zeigt ein Perforationsmittel, das das Filterelement durchdringt.
- **Figuren 12a -c**: zeigen unterschiedliche Ausführungsformen des Filterelementes mit Nadelfilz.

In den verschiedenen Figuren sind gleiche Teile stets mit den gleichen Bezugszeichen versehen und werden daher in der Regel auch jeweils nur einmal benannt bzw. erwähnt.

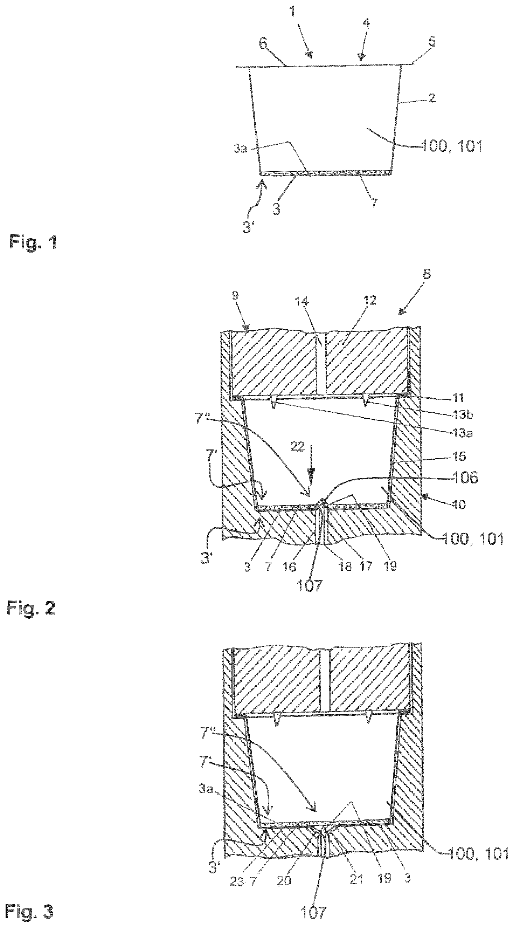

In **Figur 1** ist eine Portionskapsel 1 dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und granulatförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist ein Filterelement 7, bestehend aus einem Vliesfilter oder einem Schwamm- oder Schaumstofffilter angeordnet. Das Filterelement 7 liegt entweder lose auf der Innenseite 3a des Kapselbodens 3 auf oder ist fest, d.h. vorzugsweise stoffschlüssig, mit der Innenseite 3a des Kapselkörperbodens 3 verbunden. In der zweiten Variante ist das Filterelement 7 insbesondere nur in einem Randbereich 3' des Kapselbodens 3 am Kapselboden 3 stoffschlüssig befestigt. Das Vlies umfasst vorzugsweise ein aus Polyester-Feinfasern hergestellten Vliesstoff. Die Fasern werden besonders bevorzugt mittels eines Kalanders thermisch miteinander verbunden, beispielsweise werden eine Vielzahl von extrudierten Polyesterfasern aufeinander und nebeneinander angeordnet und anschließend mittels beheizten Walzen verfestigt (flach kalandriert). Der Vliesstoff umfasst einen Wirrfaser- und/oder faserorientierten-Vliesstoff. Das Vlies umfasst bevorzugt eine Massenbelegung (auch als Grammatur oder Flächengewicht bezeichnet) zwischen 40 und 100 Gramm pro Quadratmeter, besonders bevorzugt zwischen 60 und 80 Gramm pro Quadratmeter und ganz besonders bevorzugt von im Wesentlichen 70 Gramm pro Quadratmeter auf. Das Filterelement bzw. das Vlies weist bevorzugt eine Dicke zwischen 0,20 und 0,8 Millimetern, besonders bevorzugt zwischen 0,25 und 0,39 Millimetern und ganz besonders bevorzugt von im Wesentlichen 0,32 Millimetern auf. Das Vlies ist derart ausgebildet, dass die Luftdurchlässigkeit des Vlieses bei 100 Pascal bevorzugt zwischen 1000 und 3000 l/(m²s), besonders bevorzugt zwischen 1500 und 2500 (l/m²s) und ganz besonders bevorzugt im Wesentlichen bei 2000 l/(m²s) liegt. Das Vlies ist ferner vorzugsweise derart ausgebildet, dass die Höchstzugkraft in Längsrichtung im Wesentlichen 110 Newton pro 5 Zentimeter und in Querrichtung im Wesentlichen 67 Newton pro 5 Zentimeter beträgt, wobei die Höchstzugkraft-Dehnung in Längsrichtung im Wesentlichen 30 Prozent und in Querrichtung im Wesentlichen 38 Prozent umfasst.

In **Figur 2** ist eine Portionskapsel 1 gemäß Figur 1 dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel perforiert, so dass eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche die Ablaufrillen 17 auf. In der Darstellung ist der Boden 3 der in der Brühkammer 9, 10 befindlichen Portionskapsel 1 von dem Öffnungsdorn 16 des zweiten Brühkammelementes durchstochen, aber das über der Einstichstelle liegende Filterelement 7 ist von der Einstechspitze 19 des Öffnungsdornes 16 leicht angehoben, jedoch nicht durchstochen. Dies wird insbesondere dadurch erreicht, dass der Zentralbereich 7" nicht stoffschlüssig mit dem Kapselboden 3 verbunden ist, sondern das Filterelement 7 lediglich im Randbereich 3' des Kapselbodens 3 stoffschlüssig mit dem Kapselboden 3 verbunden ist, so dass es in Folge des mechanischen Kontaktes mit der Spitze des Öffnungsdorns 16 lediglich vom Kapselboden 3 angehoben wird und somit unperforiert bleibt (d.h. nicht vom Öffnungsdorn 16 perforiert wird). Im Randbereich 3' des Kapselbodens 3 bzw. im Randbereich 7' des Filterelements 7 bleiben der Kapselboden 3 und das Filterelement 7 miteinander in Kontakt und insbesondere stoffschlüssig miteinander verbunden, so dass keine Getränkesubstanz 101 um das Filterelement 7 herum in den Getränkeablauf 18 gelangt. Der Kapselboden 3 weist in seinem zentralen Punkt 106, in welchem der Kapselboden 3 von dem Öffnungsdorn 16 perforiert wird, optional eine Sollbruchstelle 104 auf, so dass ein vergleichsweise stumpfer Öffnungsdorn 16 zur Perforation des Kapselbodens 3 ausreichend ist und so die Gefahr, dass versehentlich auch das Filterelement 7 vom Öffnungsdorn 16 perforiert wird, ausgeräumt wird.

In **Figur 3** ist eine Portionskapsel 1 dargestellt, wobei die Ausführungsform im Wesentlichen der in Figur 2 illustrierten Ausführungsform gleicht und die Portionskapsel 1 ebenfalls in einer geschlossenen Brühkammer 8 dargestellt ist. Im Unterschied zur ersten Ausführungsform weist der Portionskapselboden 3 im Einstechbereich des Öffnungsdornes 16 jedoch eine gegen eine Einbuchtung 20 im Brühkammerboden 3a gerichtete Ausbuchtung 21 auf (die Ausbuchtung 21 ist somit in eine der Einfüllseite 4 entgegengesetzte Richtung gerichtet), in die der Öffnungsdorn 16 einsticht, ohne dabei das Filterelement 7 zu durchstechen. Ein Abheben des Filterelements 7 vom Kapselboden 3 ist somit insbesondere nicht erforderlich. Zur Herstellung des Getränkes wird wiederum nach dem Einbringen der Portionskapsel 1 in die Brühkammer 8, die Brühkammer 8 geschlossen. Während des Schließvorganges wird die Deckelfolie 6 der Portionskapsel 1 mittels der Einstechmittel 13a, 13b perforiert und nach erfolgtem Zusammenführen und Abdichten des ersten und des zweiten Brühkammerelementes 9, 10 (mittels der Dichtung 11) wird Brühwasser über den Flüssigkeitseinlass 6 zur Verfügung gestellt. Ebenso sticht während des Schließvorganges der Brühkammer der Öffnungsdorn 16 eine Öffnung in den Boden 3 der Portionskapsel 1. Das über der Einstichstelle liegende Filterelement 7 ist in seiner Dicke und Reißfestigkeit auf die Eindringtiefe der Einstechspitze 19 des Öffnungsdornes 16 abgestimmt, so dass das Filterelement 7 nicht durchstoßen wird. Alternativ liegt das Filterelement 7 über der Ausbuchtung 21 des Kapselbodens 3, die in der Einbuchtung des Brühglockenbodens 23 liegt, und der Öffnungsdorn 16 sticht lediglich in die Ausbuchtung 21 des Kapselbodens 3 und gelangt nicht bis zum Filterelement 7. Sodann strömt die Flüssigkeit, bei der Herstellung von Kaffee beispielsweise heißes Wasser, in die Kapsel 1 ein. In der Kapsel durchströmt diese Flüssigkeit das Getränkesubstrat 101 und extrahiert und/oder löst die für die Getränkeherstellung benötigten Substanzen aus dem Getränkesubstrat 101 aus. Die Strömung der Flüssigkeit in dem Getränkesubstrat 101 ist durch das Bezugszeichen 22 illustriert. Danach strömt das resultierende Getränk durch das zwischen dem Getränkesubstrat 101 und das auf dem Kapselboden 3 angeordnete Filterelement 7, welches verhindert, dass Bestandteile des Getränkesubstrates 101 partikelförmig in das resultierende Getränk gelangen und über die von dem Öffnungsdorn 16 in den Kapselboden 3 gestochene Öffnung und über die Ablaufrillen 17 des Öffnungsdornes 16 weiter in ein Auffanggefäß, beispielsweise eine Tasse oder Kanne, gelangen.

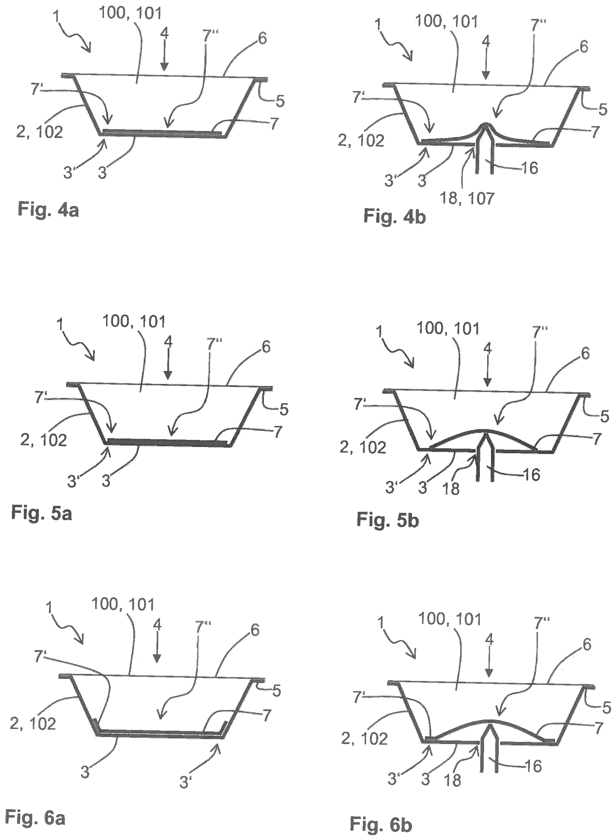

In **Figuren 4a und 4b** sind schematische Schnittbildansichten einer Portionskapsel 1 dargestellt, die Ausführungsform gleicht im Wesentlichen der in Figuren 1 und 2 illustrierten Ausführungsform, wobei das Filterelement 7 elastisch ausgebildet ist. In Figur 4a ist die Portionskapsel 1 in ihrer Ausgangsposition dargestellt, während sie in Figur 4b von dem Perforierungsmittel 16 perforiert dargestellt ist (die Portionskapsel 1 befindet sich in Figur 4b in einer nicht weiter dargestellten Brühkammer 8). Durch die elastische Ausbildung des Filterelements 7 wird das Filterelement 7 in seinem Zentralbereich 7" bei einem mechanischen Kontakt mit dem Perforierungsmittel 16 in Richtung der Einlassseite 4 gedehnt, ohne von dem Perforierungsmittel 16 perforiert oder zerrissen zu werden. Im Randbereich des Kapselbodens 3' bleibt das Filterelement 7' fest bzw. stoffschlüssig mit dem Kapselboden 3 verbunden, so dass keine Getränkesubstanz 101 vom Hohlraum 100 am Filterelement 7 vorbei in Richtung der durch das Perforierungsmittel 16 erzeugten Ausgangsöffnung 107 gelangt.

In **Figuren 5a und 5b** sind schematische Schnittbildansichten einer Portionskapsel 1 dargestellt, wobei die Ausführungsform im Wesentlichen identisch zu der in Figuren 4a und 4b illustrierten Ausführungsform ist. Das Filterelement 7 ist dabei jedoch nicht-elastisch ausgebildet und wird von dem Perforationsmittel 16 nahezu vollständig vom Kapselboden 3 angehoben. Da sich die Grundfläche des Filterelements 7 hierbei nicht verändert, rutschen die Randbereiche 7' des Filterelements nach innen, d.h. in Richtung des zentralen Punkts 106 des Kapselbodens 3'.

In **Figuren 6a und 6b** schematische Schnittbildansichten einer Portionskapsel 1 dargestellt, wobei die Ausführungsform im Wesentlichen der in Figuren 5a und 5b illustrierten Ausführungsform gleicht. Das Filterelement 7 ist insbesondere flexibel ausgebildet und weist eine Grundfläche auf, welche größer als die Grundfläche des Kapselbodens 3 ist. Dies führt dazu, dass der Randbereich 7' des Filterelements 7' sich in der in Figur 6a dargestellten Ausgangslage der Portionskapsel 1 an einen unteren Teil des Seitenwandbereichs 102 des Kapselkörpers 2, welcher sich von dem Kragenrand 5 bis zum Kapselboden 3 erstreckt, anschmiegt. Wenn nun der Kapselboden 3 durch das Perforierungsmittel 16 perforiert wird und das Filterelement 7 in seinem Zentralbereich 7" vom Kapselboden 3 durch das Perforierungsmittel 16 abgehoben wird, rückt der Randbereich 7' des Filterelements 7 in Richtung des Kapselbodens 3 nach. Auf diese Weise wird sichergestellt, dass der Randbereich 3' des Kapselbodens 3 stets mit dem Filterelement 7 bedeckt bleibt und somit keine Getränkesubstanz 101 am Filterelement 7 vorbei ungefiltert in Richtung Ablauf 18 gelangt.

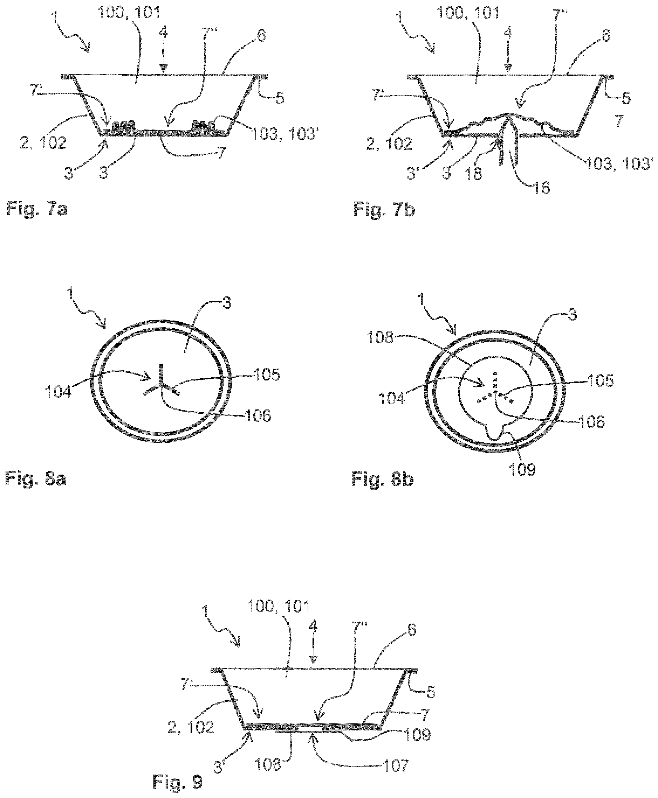

In **Figuren 7a und 7b** sind Schnittbildansichten einer Portionskapsel 1 dargestellt. Die Ausführungsform gleicht im Wesentlichen der in Figur 5a und 5b illustrierten Ausführungsform, wobei das Filterelement 7 einen Materialspeicher 103 aufweist. Der Materialspeicher 103 umfasst einen gewellten Bereich 103', d.h. einen Bereich in welchem überschüssiges Material des Filterelements 7 aufgestaut ist. Wenn nun der Zentralbereich 7" durch das Perforierungsmittel 16 vom Kapselboden 3 angehoben wird, wirken Zugkräfte auf den Materialspeicher 103, wodurch sich der gewellte Bereich 103' zumindest teilweise glättet und somit ausreichend Material zur Verfügung steht, dass der Zentralbereich 7" in ausreichender Weise angehoben werden kann und eine Zerreißen oder Perforieren des Filterelements 7 unterbunden wird.

In **Figuren 8a und 8b** ist eine Ansicht eines Kapselbodens 3 einer Portionskapsel 1 dargestellt, die siebte-Ausführungsform gleicht im Wesentlichen der in Figuren 1 und 2 illustrierten Ausführungsform, wobei die Portionskapsel 1 in Figur 8 von "unten" dargestellt ist. In dieser Ansicht ist die optionale Sollbruchstelle 104 zu erkennen, welche drei Schwächungslinien 105 umfasst, die sternförmig und in radialer Richtung um den zentralen Punkt 106 auf dem Kapselboden 3 herum angeordnet sind. Entlang der Schwächungslinien 105 weist der Kapselboden 3 eine reduzierte Materialstärke auf und/oder ist der Kapselboden 3 vorperforiert, um eine Perforation in der Brühkammer 8 zu begünstigen. Damit das Aroma der Getränkesubstanz 101 auch bei einem vorperforierten Kapselboden 3 über längere Lagerzeiten aufrecht erhalten bleibt, ist der Kapselboden 3 zumindest im Bereich der Sollbruchstelle 104 vorzugsweise mit einer perforierbaren oder von Hand abziehbaren Folie 108 versiegelt. Die Folie 108 klebt dazu beispielsweise auf der Außenseite des Kapselbodens 3 und ist mit einer Abziehlasche 109 versehen, welche nicht am Kapselboden 3 klebt und an welcher die Folie 108 von Hand abgezogen werden kann. Eine beispielhafte Ausführungsform mit Schwächungslinien 105 in Form von Perforationen im Kapselboden 3, sowie mit einer Folie 108 ist in Figur 8b illustriert.

In **Figur 9** ist eine Schnittbildansicht einer Portionskapsel 1 dargestellt. Die Ausführungsform gleich im Wesentlichen der in Figur 1 dargestellten Ausführungsform, wobei die Portionskapseln 1 der achten Ausführungsform mit einer permanenten Ausgangsöffnung 107 im Kapselboden 3 ausgestattet ist, welche in der Ausgangslage mit der Folie 108 abgedichtet ist. Sollbruchstellen weist die Portionskapsel 1 daher nicht auf. Die Folie 108 weist dabei ebenfalls die Abziehlasche 109 zum Abziehen der Folie 108 von Hand auf. Eine Perforation des Kapselbodens 3 mittels eines äußeren Perforationsmittels 16 ist nicht vorgesehen. Vielmehr wird dem Einlegen der Portionskapsel 1 in die Brühkammer 8 wird die Folie 108 mittels der Abziehlasche 109 einfach vom Kapselboden 3 abgezogen und der Brühvorgang kann anschließend direkt und ohne Perforierung des Kapselbodens 3 gestartet werden.

**Figuren 10 und 11** zeigen eine weitere Ausführungsform. In dem vorliegenden Fall ist das Filterelement 7 so ausgeführt, dass das Performationsmittel 16 beim Eindringen in die Kapsel das Filterelement spannt, ansticht (Fig. 10) und/oder durchsticht, d.h. das Filterelement ist beispielsweise mit dem Boden der Kapsel zumindest abschnittsweise stoffschlüssig verbunden, an dem Boden möglichst großflächig anliegend vorgesehen und/oder gespannt.

**Figuren 12** **a - c** zeigen unterschiedliche Ausführungsformen eines Filterelementes 7 mit einer Filzstruktur 7.1, nämlich einer Nadelfilzstruktur. Dieses Filterelement 7 weist eine Trägerstruktur 7.2, nämlich eine Gewebestruktur auf. An dieser und/oder in diese Gewebestruktur 7.2 wird auf der gesamten, dem Kaffeepulver oder Tee zugewandten Oberfläche eine Filzstruktur 7.1, angeordnet und durch Nadelfilzen mit dieser verbunden, was in Figur 12a dargestellt ist.
Die Ausführungsform gemäß Figur 12b weist zwei Filzstrukturen 7.1 und 7.3 auf, die jeweils an und/oder in der Trägerstruktur angeordnet sind. Beide Strukturen erstrecken sich vorzugsweise über den gesamten Querschnitt, d.h hier die gesamte kreisförmige Oberfläche, des Filterelementes. Die Filzstrukturen 7.1 und 7.3 können gleich oder unterschiedlich dick sein. Vorzugsweise ist die Filzstruktur 7.1 dünner ausgeführt als die Schicht 7.3 oder umgekehrt. Die Trägerschicht ist dann bezüglich der Mitte, bezogen auf die Dicke, des Filterelementes versetzt vorgesehen sein. Die Strukturen 7.1 und 7.3 können aus unterschiedlichen oder demselben Materiali(en) hergestellt sein. Diese betreffen nicht nur die Substanz aus der sie hergestellt sind, sondern auch die Fadendurchmesser und/oder die Fadenlänge aus denen die Filzstrukturen gefertigt werden. Zwischen den beiden Strukturen 7.1 und 7.3 ist eine Trägerstruktur 7.2 vorgesehen, in der sich kein oder nur wenig Filzstruktur befindet und die vorzugsweise Querströmungen zulässt.
Figur 12c zeigt noch eine weitere Ausführungsform eines Filterelementes mit Filzstruktur. In dem vorliegenden Fall sind zwei Filterelemente 7 mit einer Filzstruktur, wie sie beispielsweise gemäß den Figuren 12a und b beschrieben wurden, übereinander angeordnet. Die Filterelemente 7 können lediglich aufeinander liegen oder miteinander verbunden sein. Die Filterelemente 7 können aber auch nur Filz ohne Trägerstruktur aufweisen.

Alle Filterelemente mit einer Filzstruktur haben den Vorteil, dass sie einen geringen Druckverlust aufweisen, bzw. dass der Druckabbau entlang des Fliterelementes mit einem geringen Gradienten erfolgt. Dadurch kann beispielsweise Kaffee ohne Crema, d.h. Schaum, oder Tee ohne Schaum hergestellt werden. Die Filterelemente mit einer Filzstruktur werden vorzugsweise lediglich in die Kapsel eingelegt. Vorzugsweise weist das Filterelement mit der Filzstruktur einen größeren Durchmesser auf als der Boden der Kapsel, so dass es sich im Randbereich gegen die Wandung der Kapsel drückt.

Vorzugsweise ist das Filterelement mit Filzstruktur, insbesondere vollständig, aus PETgefertigt.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckelfolie
- 7: Filterelement
- 7': Randbereich des Filterelements
- 7": Zentralbereich des Filterelements
- 7.1: Filzstruktur, Nadelfilzstruktur
- 7.2: Trägerstruktur
- 7.3: Filzstruktur, Nadelfilzstruktur
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ausbuchtung
- 22: Zubereitungsflüssigkeitsfluss
- 23: Brühglockenboden
- 100: Hohlraum
- 101: Getränkesubstrat
- 102: Seitenwandbereich
- 103: Materialspeicher
- 103': Gewellter oder gefalteter Bereich
- 104: Sollbruchstelle
- 105: Schwächungslinien
- 106: Zentraler Punkt
- 107: Ausgangsöffnung
- 108: Folie
- 109: Abziehlasche

## Patentansprüche

1. Portionskapsel (1) zur Herstellung eines Getränks aufweisend einen Kapselkörper (2) mit einem Kapselboden (3) und einer Einfüllseite (4), wobei zwischen dem Kapselboden (3) und der Einfüllseite (4) ein Hohlraum (100) zur Aufnahme eines pulverförmigen oder flüssigen Getränkesubstrats (101) ausgebildet ist und wobei zwischen dem Getränkesubstrat (101) und dem Kapselboden (3) ein Filterelement (7) angeordnet ist, wobei das Filterelement (7) im Bereich des Kapselbodens (3) angeordnet ist **dadurch gekennzeichnet, dass** das Filterelement (7) eine Nadelfilzstruktur (7.1, 7.3), aufweist, die an oder in einer Trägerstruktur (7.2) vorgesehen ist, wobei die Trägerstruktur (7.2) eine Gewebestruktur ist.

2. Portionskapsel nach Anspruch 1, **dadurch gekennzeichnet, dass** das Filterelement (7) zwei Filzstrukturen (7.1., 7.3), vorzugsweise Nadelfilzstrukturen, aufweist, die vorzugsweise durch die Trägerstruktur (7.2) voneinander getrennt sind.

3. Portionskapsel (1) nach einem der vorhergehenden Ansprüche, **dadurch gekennzeichnet, dass** das Filterelement (7) elastisch ausgebildet ist und zumindest in seinem Randbereich (7') im Bereich des Kapselbodens (3) angeordnet ist.

4. Portionskapsel (1) nach einem der vorhergehenden Ansprüche, **dadurch gekennzeichnet, dass** das Filterelement (7) an den Boden der Kapsel gesiegelt, insbesondere ultraschallgesiegelt und vorzugsweise gespannt ist.

5. Portionskapsel (1) nach einem der vorhergehenden Ansprüche, **dadurch gekennzeichnet, dass** das Filterelement (7) im Hohlraum (100) angeordnet ist und auf einer der Einfüllseite (4) zugewandten Seite des Kapselbodens (3) aufliegt.

6. Portionskapsel (1) nach einem der vorhergehenden Ansprüche, **dadurch gekennzeichnet, dass** der Durchmesser des Filterelements (7) größer als der Durchmesser des Kapselbodens (3) ist.

7. Portionskapsel (1) nach einem der vorhergehenden Ansprüche, **dadurch gekennzeichnet, dass** das Filterelement (7) einen Randbereich (7') aufweist, welcher im Wesentlichen in Richtung der Einfüllseite (4) absteht und/oder in Richtung der Einfüllseite (4) umgebogen ist.

8. Portionskapsel (1) nach Anspruch 7, **dadurch gekennzeichnet, dass** der Randbereich (7') sich zumindest teilweise entlang eines Seitenwandbereichs (102) des Kapselkörpers (2) erstreckt, wobei sich der Seitenwandbereich zwischen der Einfüllseite (4) und dem Kapselboden (3) erstreckt.

9. Portionskapsel (1) nach einem der vorhergehenden Ansprüche, **dadurch gekennzeichnet, dass** das Filterelement (7) den Kapselboden (3) vollständig oder nur teilweise überdeckt.

10. Portionskapsel (1) nach einem der vorhergehenden Ansprüche, **dadurch gekennzeichnet, dass** das Filterelement (7) am Kapselboden (3) befestigt ist, wobei das Filterelement (7) vorzugsweise stoffschlüssig am Kapselboden (3) befestigt ist.

11. Portionskapsel (1) nach einem der vorhergehenden Ansprüche, **dadurch gekennzeichnet, dass** das Filterelement (7) in einem Randbereich (3') des Kapselbodens (3) am Kapselboden (3) befestigt ist und/oder dass das Filterelement (7) in einem Randbereich (7') des Filterelements (7) am Seitenwandbereich (102) befestigt ist.

12. Portionskapsel (1) nach einem der vorhergehenden Ansprüche, **dadurch gekennzeichnet, dass** der Kapselboden (3) eine Ausbuchtung (21) in eine der Einfüllseite (4) entgegengesetzte Richtung (103) aufweist.

13. Portionskapsel (1) nach einem der vorhergehenden Ansprüche, **dadurch gekennzeichnet, dass** der Kapselboden (3) derart ausgebildet ist, dass bei einer Perforation des Kapselbodens (3) durch ein äußeres Perforationsmittel (16) das Filterelement (7) unperforiert bleibt.

14. Portionskapsel (1) nach einem der vorhergehenden Ansprüche, **dadurch gekennzeichnet, dass** das Filterelement (7) derart ausgebildet ist, dass bei einer Perforation des Kapselbodens (3) durch ein äußeres Perforationsmittel (16) zumindest teilweise ein Abheben des Filterelements (7) vom Kapselboden (3) erfolgt.

15. Portionskapsel (1) nach Anspruch 14, **dadurch gekennzeichnet, dass** das Filterelement (7) sich nur in einem Zentralbereich (7") vom Kapselboden (3) abhebt und im Randbereich (3') des Kapselbodens (3) weiter auf dem Kapselboden (3) aufliegt oder am Kapselboden (3) befestigt ist.

16. Portionskapsel (1) nach einem der vorhergehenden Ansprüche, **dadurch gekennzeichnet, dass** das Filterelement (7) derart ausgebildet ist, dass bei einer Perforation des Kapselbodens (3) durch ein äußeres Perforationsmittel (16) das Filterelement (7) sich in seinem Zentralbereich (7") vom Kapselboden (3) abhebt und ein in Richtung der Einfüllseite (4) vormals abstehender Randbereich (7') des Filterelements (7) zumindest teilweise in Richtung des Kapselbodens (3) nachrückt.

17. Portionskapsel (1) nach einem der vorhergehenden Ansprüche, **dadurch gekennzeichnet, dass** das Filterelement (7) derart ausgebildet ist und an dem Kapselboden befestigt ist, dass bei einer Perforation des Kapselbodens (3) durch ein äußeres Perforationsmittel (16) das Filterelement (7) an- und/oder durchstochen wird.

18. Portionskapsel (1) nach einem der vorhergehenden Ansprüche, **dadurch gekennzeichnet, dass** der Kapselboden (3) eine Sollbruchstelle (104) aufweist, welche dazu vorgesehen ist, infolge eines mechanischen Kontakts mit einem äußeren Perforationsmittel (16) aufzureißen.

19. Portionskapsel (1) nach Anspruch 18, **dadurch gekennzeichnet, dass** die Sollbruchstelle (104) eine Mehrzahl von sternförmig um einen zentralen Punkt (106) des Kapselbodens (3) angeordnete Schwächungslinien (105) umfasst, wobei der Kapselboden (3) entlang der Schwächungslinien (105) eine reduzierte Materialstärke aufweist und/oder perforiert ist.

20. Portionskapsel (1) nach einem der vorhergehenden Ansprüche, **dadurch gekennzeichnet, dass** der Kapselboden (3) eine Ausgangsöffnung (107) aufweist, welche vorzugsweise mit einer Folie (108) abgedichtet ist, wobei die Folie (108) besonders bevorzugt eine Abziehlasche (109) zum Abziehen der Folie von Hand aufweist.

21. Verfahren zur Herstellung eines Getränks mit einer Portionskapsel (1) nach einem der vorhergehenden Ansprüche, **dadurch gekennzeichnet, dass** in einem ersten Verfahrensschritt die Portionskapsel (1) bereitgestellt wird, dass in einem zweiten Verfahrensschritt der Kapselboden (3) mittels eines äußeren Perforationsmittels (16) perforiert wird, und dass in einem dritten Verfahrensschritt das Filterelement (7) zumindest teilweise vom Kapselboden (3) beabstandet wird.

22. Verfahren nach Anspruch 21, **dadurch gekennzeichnet, dass** im dritten Verfahrensschritt das Filterelement (7) nur in einem Zentralbereich (7") vom Kapselboden (3) beabstandet wird und im Randbereich (3') des Kapselbodens (3) weiter auf dem Kapselboden (3) aufliegt oder am Kapselboden (3) befestigt bleibt.

23. Verfahren nach einem der Ansprüche 21 oder 22, **dadurch gekennzeichnet, dass** das Filterelement (7) bei der Beabstandung des Zentralbereichs (7") vom Kapselboden (3) zumindest teilweise gedehnt wird.

24. Verfahren nach einem der Ansprüche 21 bis 23, **dadurch gekennzeichnet, dass** ein in Richtung der Einfüllseite (4) abstehender Randbereich (7') des Filterelements (7) bei der Beabstandung des Zentralbereichs (7") vom Kapselboden (3) während des dritten Verfahrensschrittes in Richtung des Kapselbodens (3) nachrückt.

25. Verwendung einer Portionskapsel (1) nach einem der Ansprüche 1 bis 20 zur Herstellung eines Getränks, vorzugsweise zur Herstellung eines Kaffee-, Kakao-, Tee- und/oder Milchgetränks.

## Claims

1. Portion capsule (1) for producing a beverage, having a capsule body (2) with a capsule base (3) and a filling side (4), with a cavity (100) for accommodating a pulverulent or liquid beverage base (101) being formed between the capsule base (3) and the filling side (4), and with a filter element (7) being arranged between the beverage base (101) and the capsule base (3), with the filter element (7) being arranged in the region of the capsule base (3) **characterized in that** the filter element (7) comprises a needle felt structure (7.1, 7.3), which is provided on or in a support structure (7.2).

2. Portion capsule according to Claim 2, **characterized in that** the filter element (7) has two felt structures (7.1, 7.3), preferably needle felt structures, which are preferably separated from one another by the support structure (7.2).

3. Portion capsule (1) according to one of the preceding claims, **characterized in that** the filter element (7) is elastic and is arranged, at least in its edge region (7'), in the region of the capsule base (3).

4. Portion capsule (1) according to one of the preceding claims, **characterized in that** the filter element (7) is sealed, in particular ultrasonically sealed and preferably stretched, at the base of the capsule.

5. Portion capsule (1) according to one of the preceding claims, **characterized in that** the filter element (7) is arranged in the cavity (100) and rests on a side of the capsule base (3) which faces the filling side (4).

6. Portion capsule (1) according to one of the preceding claims, **characterized in that** the diameter of the filter element (7) is greater than the diameter of the capsule base (3).

7. Portion capsule (1) according to one of the preceding claims, **characterized in that** the filter element (7) has an edge region (7') which projects substantially in the direction of the filling side (4) and/or is bent in the direction of the filling side (4).

8. Portion capsule (1) according to Claim 7, **characterized in that** the edge region (7') extends at least partially along a side wall region (102) of the capsule body (2), with the side wall region extending between the filling side (4) and the capsule base (3).

9. Portion capsule (1) according to one of the preceding claims, **characterized in that** the filter element (7) completely or only partially covers the capsule base (3).

10. Portion capsule (1) according to one of the preceding claims, **characterized in that** the filter element (7) is attached to the capsule base (3), with the filter element (7) preferably being attached to the capsule base (3) in a cohesive manner.

11. Portion capsule (1) according to one of the preceding claims, **characterized in that** the filter element (7) is attached to the capsule base (3) in an edge region (3') of the capsule base (3), and/or **characterized in that** the filter element (7) is attached to the side wall region (102) in an edge region (7') of the filter element (7).

12. Portion capsule (1) according to one of the preceding claims, **characterized in that** the capsule base (3) has a protrusion (21) in a direction (103) opposing the filling side (4).

13. Portion capsule (1) according to one of the preceding claims, **characterized in that** the capsule base (3) is formed in such a way that, when the capsule base (3) is perforated by an external perforation means (16), the filter element (7) remains unperforated.

14. Portion capsule (1) according to one of the preceding claims, **characterized in that** the filter element (7) is formed in such a way that, when the capsule base (3) is perforated by an external perforation means (16), the filter element (7) is at least partially lifted off from the capsule base (3).

15. Portion capsule (1) according to Claim 14, **characterized in that** the filter element (7) lifts off from the capsule base (3) only in a central region (7'') and continues to rest on the capsule base (3) or remains attached to the capsule base (3) in the edge region (3') of the capsule base (3).

16. Portion capsule (1) according to one of the preceding claims, **characterized in that** the filter element (7) is formed in such a way that, when the capsule base (3) is perforated by an external perforation means (16), the filter element (7) lifts off from the capsule base (3) in the central region (7'') of said filter element and an edge region (7') of the filter element (7), which edge region previously projected in the direction of the filling side (4), moves at least partially in the direction of the capsule base (3).

17. Portion capsule (1) according to one of the preceding claims, **characterized in that** the filter element (7) is formed and attached to the capsule base in such a way that, when the capsule base (3) is perforated by an external perforation means (16), the filter element (7) is tapped and/or pierced.

18. Portion capsule (1) according to one of the preceding claims, **characterized in that** the capsule base (3) has a predetermined breaking point (104) which is intended to tear open as a result of mechanical contact with an external perforation means (16).

19. Portion capsule (1) according to Claim 18, **characterized in that** the predetermined breaking point (104) has a plurality of lines of weakness (105) which are arranged in a star shape around a central point (106) of the capsule base (3), **characterized in that** the capsule base (3) has a reduced material thickness and/or is perforated along the lines of weakness (105).

20. Portion capsule (1) according to one of the preceding claims, **characterized in that** the capsule base (3) has an outlet opening (107) which is preferably sealed off by a film or foil (108), with the film or foil (108) particularly preferably having a pull-off tab (109) for pulling off the film or foil by hand.

21. Method for producing a beverage using a portion capsule (1) according to one of the preceding claims, **characterized in that** the portion capsule (1) is provided in a first method step, **characterized in that** the capsule base (3) is perforated by means of an external perforation means (16) in a second method step, and **characterized in that** the filter element (7) is at least partially spaced apart from the capsule base (3) in a third method step.

22. Method according to Claim 21, **characterized in that**, in the third method step, the filter element (7) is spaced apart from the capsule base (3) only in a central region (7'') and continues to rest on the capsule base (3) or remains attached to the capsule base (3) in the edge region (3') of the capsule base (3).

23. Method according to either of Claims 21 and 22, **characterized in that** the filter element (7) is at least partially stretched when the central region (7'') is spaced apart from the capsule base (3).

24. Method according to one of Claims 21 to 23, **characterized in that** an edge region (7') of the filter element (7) which projects in the direction of the filling side (4) moves in the direction of the capsule base (3) when the central region (7'') is spaced apart from the capsule base (3) during the third method step.

25. Use of a portion capsule (1) according to one of Claims 1 to 20 for producing a beverage, preferably for producing a coffee, cocoa, tea and/or milk beverage.

## Revendications

1. Capsule (1) pour la production d'une boisson présentant un corps de capsule (2) avec un fond de capsule (3) et un côté de remplissage (4), dans laquelle une cavité (100) destinée à contenir un substrat de boisson pulvérulent ou liquide (101) est formée entre le fond de capsule (3) et le côté de remplissage (4) et dans laquelle un élément de filtre (7) est disposé entre le substrat de boisson (101) et le fond de capsule (3), dans laquelle l'élément de filtre (7) est disposé dans la région du fond de capsule (3), **caractérisée en ce que** l'élément de filtre (7) présente une structure de feutre aiguilleté (7.1, 7.3), qui est prévue sur ou dans une structure de support (7.2).

2. Capsule selon la revendication 1, **caractérisée en ce que** l'élément de filtre (7) présente deux structures de filtre (7.1, 7.3), de préférence des structures de feutre aiguilleté, qui sont de préférence séparées l'une de l'autre par la structure de support (7.2).

3. Capsule (1) selon l'une quelconque des revendications précédentes, **caractérisée en ce que** l'élément de filtre (7) est élastique et est disposé au moins dans sa région de bord (7') dans la région du fond de capsule (3).

4. Capsule (1) selon l'une quelconque des revendications précédentes, **caractérisée en ce que** l'élément de filtre (7) est soudé sur le fond de la capsule, en particulier soudé aux ultrasons et de préférence serré.

5. Capsule (1) selon l'une quelconque des revendications précédentes, **caractérisée en ce que** l'élément de filtre (7) est disposé dans la cavité (100) et repose sur un côté du fond de capsule (3) tourné vers le côté de remplissage (4).

6. Capsule (1) selon l'une quelconque des revendications précédentes, **caractérisée en ce que** le diamètre de l'élément de filtre (7) est plus grand que le diamètre du fond de capsule (3).

7. Capsule (1) selon l'une quelconque des revendications précédentes, **caractérisée en ce que** l'élément de filtre (7) présente une région de bord (7'), qui est saillante essentiellement en direction du côté de remplissage (4) et/ou qui est courbée en direction du côté de remplissage (4).

8. Capsule (1) selon la revendication 7, **caractérisée en ce que** la région de bord (7') s'étend au moins en partie le long d'une région de bord latéral (102) du corps de capsule (2), dans laquelle la région de bord latéral s'étend entre le côté de remplissage (4) et le fond de capsule (3).

9. Capsule (1) selon l'une quelconque des revendications précédentes, **caractérisée en ce que** l'élément de filtre (7) recouvre entièrement ou seulement en partie le fond de capsule (3).

10. Capsule (1) selon l'une quelconque des revendications précédentes, **caractérisée en ce que** l'élément de filtre (7) est fixé au fond de capsule (3), dans laquelle l'élément de filtre (7) est de préférence fixé matériellement au fond de capsule (3).

11. Capsule (1) selon l'une quelconque des revendications précédentes, **caractérisée en ce que** l'élément de filtre (7) est fixé au fond de capsule (3) dans une région de bord (3') du fond de capsule (3) et/ou **en ce que** l'élément de filtre (7) est fixé à la région de bord latéral (102) dans une région de bord (7') de l'élément de filtre (7).

12. Capsule (1) selon l'une quelconque des revendications précédentes, **caractérisée en ce que** le fond de capsule (3) présente un enfoncement (21) dans une direction (103) opposée au côté de remplissage (4).

13. Capsule (1) selon l'une quelconque des revendications précédentes, **caractérisée en ce que** le fond de capsule (3) est réalisé de telle manière que lors d'une perforation du fond de capsule (3) par un moyen de perforation extérieur (16) l'élément de filtre (7) reste non perforé.

14. Capsule (1) selon l'une quelconque des revendications précédentes, **caractérisée en ce que** l'élément de filtre (7) est réalisé de telle manière que lors d'une perforation du fond de capsule (3) par un moyen de perforation extérieur (16) il se produise au moins en partie un soulèvement de l'élément de filtre (7) du fond de capsule (3).

15. Capsule (1) selon la revendication 14, **caractérisée en ce que** l'élément de filtre (7) ne se soulève du fond de capsule (3) que dans une région centrale (7") et repose encore sur le fond de capsule (3) ou est fixé au fond de capsule (3) dans la région de bord (3') du fond de capsule (3).

16. Capsule (1) selon l'une quelconque des revendications précédentes, **caractérisée en ce que** l'élément de filtre (7) est réalisé de telle manière que lors d'une perforation du fond de capsule (3) par un moyen de perforation extérieur (16) l'élément de filtre (7) se soulève du fond de capsule (3) dans sa région centrale (7") et qu'une région de bord (7') de l'élément de filtre (7) antérieurement saillante en direction du côté de remplissage (4) recule au moins partiellement en direction du fond de capsule (3).

17. Capsule (1) selon l'une quelconque des revendications précédentes, **caractérisée en ce que** l'élément de filtre (7) est réalisé et est fixé au fond de capsule de telle manière que lors d'une perforation du fond de capsule (3) par un moyen de perforation extérieur (16) l'élément de filtre (7) soit piqué et/ou transpercé.

18. Capsule (1) selon l'une quelconque des revendications précédentes, **caractérisée en ce que** le fond de capsule (3) présente un point de rupture théorique (104), qui est prévu pour se déchirer par suite d'un contact mécanique avec un moyen de perforation extérieur (16).

19. Capsule (1) selon la revendication 18, **caractérisée en ce que** le point de rupture théorique (104) comprend une multiplicité de lignes de faiblesse (105) disposées en forme d'étoile autour d'un point central (106) du fond de capsule (3), dans laquelle le fond de capsule (3) présente une épaisseur de matière réduite et/ou est perforé le long des lignes de faiblesse (105).

20. Capsule (1) selon l'une quelconque des revendications précédentes, **caractérisée en ce que** le fond de capsule (3) présente une ouverture d'accès (107), qui est de préférence obturée avec une feuille (108), dans laquelle la feuille (108) présente de préférence encore une patte de traction (109) pour retirer la feuille à la main.

21. Procédé de production d'une boisson avec une capsule (1) selon l'une quelconque des revendications précédentes, **caractérisé en ce que** dans une première étape de procédé on prépare la capsule (1), **en ce que** dans une deuxième étape de procédé on perfore le fond de capsule (3) au moyen d'un moyen de perforation extérieur (16), et **en ce que** dans une troisième étape on écarte l'élément de filtre (7) au moins partiellement du fond de capsule (3).

22. Procédé selon la revendication 21, **caractérisé en ce que** dans la troisième étape de procédé on écarte l'élément de filtre (7) du fond de capsule (3) uniquement dans une région centrale (7") et l'élément de filtre (7) repose encore sur le fond de capsule (3) ou est fixé au fond de capsule (3) dans la région de bord (3') du fond de capsule (3).

23. Procédé selon une des revendications 21 ou 22, **caractérisé en ce que** l'on étire au moins partiellement l'élément de filtre (7) lors de l'écartement de la région centrale (7") du fond de capsule (3).

24. Procédé selon l'une quelconque des revendications 21 à 23, **caractérisé en ce qu'**une région de bord (7') de l'élément de filtre (7) saillante en direction du côté de remplissage (4) recule en direction du fond de capsule (3) lors de l'écartement de la région centrale (7") du fond de capsule (3) pendant la troisième étape de procédé.

25. Utilisation d'une capsule (1) selon l'une quelconque des revendications 1 à 20 pour la préparation d'une boisson, en particulier d'une boisson au café, au cacao, au thé et/ou au lait.
